# EUROPÄISCHE PATENTSCHRIFT

(11) **EP 0 735 814 B1**
(45) Veröffentlichungstag und Bekanntmachung des Hinweises auf die Patenterteilung: **30.10.2002**
(21) Anmeldenummer: 95903341.6
(22) Anmeldetag: 14.12.1994
(51) Int. Cl.: A01N 25/04

(54) **ÖL-IN-WASSER-EMULSIONEN**
OIL IN WATER EMULSIONS
EMULSIONS HUILE DANS L'EAU

(30) Priorität: 22.12.1993 DE 4343856
(43) Veröffentlichungstag der Anmeldung: 09.10.1996
(73) Patentinhaber: Clariant GmbH, 65929 Frankfurt am Main (DE)
(72) Erfinder: FRISCH, Gerhard, D-61273 Wehrheim (DE); DAMO, Zoltan, D-65817 Eppstein (DE)
(86) Internationale Anmeldenummer: EP9404141
(87) Internationale Veröffentlichungsnummer: WO95017087

(56) Entgegenhaltungen:
- EP-A- 0 118 759
- EP-A- 0 196 463
- EP-A- 0 224 846
- EP-A- 0 289 909
- EP-A- 0 499 587
- WO-A-94/10839
- DE-A- 3 624 910
- FR-A- 2 452 250
- US-A- 4 107 302

## Beschreibung

Es sind bereits zahlreiche wäßrige Emulsionen von agrochemischen Wirkstoffen bekannt. Derartige Zubereitungen lassen sich z.B. dadurch herstellen, daß man die in Wasser meist unlöslichen Wirkstoffe in einer solchen Menge an organischen Solventien löst und mit einer solchen Menge an Emulgatoren und Zusatzstoffen versetzt, daß sich beim Formulieren mit Wasser auf die Anwendungskonzentrationen ausreichend stabile Emulsionen bilden.

Aus dem Stand der Technik sind Öl-in-Wasser-Emulsionen bekannt, die phosphorylierte Tenside enthalten.

EP-A-0 224 846 beschreibt Pflanzenschutzmittel auf der Basis von wäßrigen Emulsionen, die neben dem Wirkstoff als Dispergiermittel ein in alpha- und omega-Stellung phosphoryliertes Ethylenoxid-Propylenoxid-Ethylenoxid-Block-Copolymerisat oder ein Salz desselben enthalten.
Nachteilig an den beschriebenen Emulsionen ist, daß sie lediglich weitgehend frei von mit Wasser nicht mischbaren organischen Lösungsmitteln sind.

EP-A-0 118 759 offenbart Pflanzenschutzmittel in Form von wäßrigen Emulsionskonzentraten, die eine oder mehrere flüssige oder gelöste Wirkstoffe, Wasser und als öl- und wasserlösliche Dispergiermittel 0,5 - 20 Gew.-% Salze von phosphorylierten Block-Copolymerisaten auf Basis von Propylenoxid (PO) und Ethylenoxid (EO) der Formel 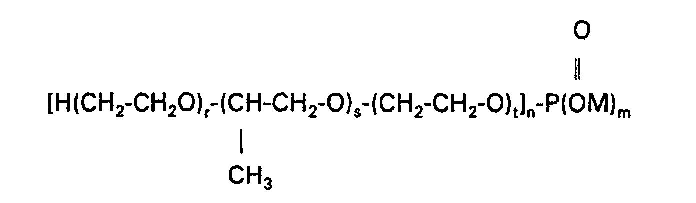 enthalten,
worin
r und s unabhängig voneinander eine Zahl zwischen 20 und 300,
t eine Zahl zwischen 10 und 300,
n und m unabhängig voneinander 1 oder 2, wobei die Summe n+m 3 sein muß, und
M ein Alkalimetallkation, ein Äquivalent eines Erdalkalimetallkations, Ammonium, Alkylammonium oder Alkanolammonium.
Als geeignete Wirkstoffe werden lediglich hydrolysebeständige Insektizide, Herbizide und Pheromone genannt.

US-A-4 107 302 betrifft wäßrige Insektizidkonzentratmischungen, die einen Wirkstoff aus der Gruppe der Phosphorsäureester und/oder Thiophosphorsäureester und eine oberflächenaktive Verbindung enthalten. Als nichtionische oberflächenaktive Verbindungen werden bevorzugt ethoxylierte Alkylallylphenylether, z. B. Distyrylmethylphenolethoxilat mit 10 EO eingesetzt. Nachteilig an den dort beschriebenen Mischungen ist der zwingende Einsatz einer wäßrigen Pufferlösung zur Einstellung eines pH-Bereiches von 3,0 bis 8,5. Darüber hinaus wird die Zugabe von organischen Lösungsmitteln, wie Ketonen, Ethern und Alkoholen für Mischungen empfohlen, deren Wirkstoffgehalt 30 Gew.-% überschreitet.

EP-A-0 196 463 betrifft phosphorsäureesterhaltige Makroemulsionen, wobei als Tensid zur Wirkstoffdispergierung die wäßrige Lösung eines Nonylphenol-Propylenoxid-Ethylenoxid-Adduktes und/oder die wäßrige Lösung eines Ethylenoxid-Propylenoxid-Ethylenoxid-Blockcopolymeren mit einem mittleren Molekulargewicht zwischen 2000 und 8000 und HLB-Werten zwischen 8 und 30 eingesetzt wird. Die beschriebenen Makroemulsionen enthalten zwingend den Zusatzstoff Glycerin. Bei Einsatz eines Wirkstoffes, der bei Raumtemperatur fest ist, wird eine Lösung des betreffenden Stoffes in einem aromatischen Verdünnungsmittel verwendet.

EP-A-0 130 370 betrifft Pflanzenschutzmittelkombinationen, die durch Vermischen einer Wirkstoffdispersion und einer Wirkstofflösung erhalten werden. Die derart hergestellten Pflanzenschutzmittelkombinationen enthalten als phosphorylierte Tenside beispielsweise das Na-Salz von C₁₂-C₁₈-Alkylpolyglykoletherphosphat-mono-/-diester (®Forlanit P, Henkel KGaA) und Triethanolamidsalze eines Gemisches von Phosphorsäure-mono- und -diestern eines Tristyrylphenol-Polyglykolethers mit 18 EO-Einheiten (®Soprophor FI, Rhône Poulenc) und als sulfatierte und sulfonierte Tensidverbindungen beispielsweise das Na-Salz des Sulfobernsteinsäurehalbesters und Na-Ligninsulfonat. Nachteilig an den dort beschriebenen Pflanzenschutzmittelkombinationen ist der Einsatz von Wirkstofflösungen, die einen hohen Gehalt (40 - 48 Gew.-%) an organischen Lösungsmitteln, wie Xylol und Methylnaphthalin aufweisen.

Öl-in-Wasser-Emulsionen, die als Dispergiermittel nicht-ionische Tenside enthalten, sind ebenfalls aus dem Stand der Technik bekannt.

EP-A-0 289 909 beinhaltet wäßrige, stabile Emulsionen von Organo-Phosphor-Schädlingsbekämpfungsmitteln. die neben dem Wirkstoff ein nichtionisches Block-, Misch- oder Mischblockcopolymer als Tensid sowie zwingend Harnstoff beinhalten, um eine genügende Phasenstabilisierung zu erreichen.

Eine Reihe weiterer Druckschriften aus dem Stand der Technik betrifft Öl-in-Wasser-Emulsionen, die ionische Tenside auf Basis von Sulfonaten bzw. Sulfaten beinhalten.

Aus EP-A-062 181 sind Öl-in-Wasser-Emulsionen (O/W) bekannt, die neben dem Wirkstoff als Emulgator mindestens einen, im allgemeinen jedoch mehrere Alkylarylpolyglykolether im Gemisch mit ionischen Alkylarylsulfonsäuresalzen enthalten. Nachteilig an diesen Emulsionen ist das Erfordernis eines Tensidgemisches aus nichtionischen und ionischen Tensiden.

EP-A-0 160 182 nennt wäßrige Mikroemulsionen, die als Wirkstoff ein synthetisches Pyrethoid und als Emulgator ein Tensid aus Calciumdodecylsulfonat, ethoxyliertem Distyrylphenolammoniumsulfat und ethoxylierten Tristyrylphenol enthalten.
Die dort beschriebenen wäßrigen Emulsionskonzentrate (EW) enthalten zwingend ein Tensidgemisch aus ionischen und nichtionischen Tensiden.

US-A-2 696 453 beschreibt Pflanzenschutzformulierungen, die zwingend eine Mischung aus einem nichtionischen Tensid, beispielsweise Isooctylphenolether mit 10 - 11 Mol EO (®Triton X-100) oder Alkylphenoxypolyethoxyethanol (®Triton X-155) und einem öllöslichen Calcium- oder Magnesium-Salz der Alkylbenzolsulfonsäure enthalten. Ein weiterer Nachteil dieser Pflanzenschutzformulierungen ist in dem hohen Gehalt an organischen Lösungsmitteln, wie Xylol, Kerosin, Naphthalinderivate zu sehen, für den Werte von 26 zu 70 Gew.-% angegeben werden.

Der vorliegenden Erfindung lag die Aufgabe zugrunde, Pflanzenschutzformulierungen in Form von wäßrigen Emulsionskonzentraten auf Basis von Wirkstoffen, insbesondere hydrolyseempfindlichen Wirkstoffen, aus der Gruppe der Phosphorsäureester, Thiophosphorsäureester und/oder Carbamate zu schaffen, die vollständig frei von organischen Lösungsmitteln sind, über eine ausgezeichnete chemische und physikalische Stabilität verfügen, insbesondere gegen Hydrolyse beständig sind und auch bei tiefen Temperaturen (-10°C) stabil sind, sowie allein oder in Mischung mit anderen flüssigen Zubereitungen nach Belieben mit Wasser verdünnbar sind.

Es wurde nun überraschenderweise gefunden, daß der Einsatz bestimmter Tensidverbindungen zu den gewünschten Pflanzenschutzformulierungen führt.
Bei diesen Tensidverbindungen handelt es sich im einzelnen um
A) nichtionische Tensidverbindungen der nachfolgenden Formel I,
B) phosphorylierte Tensidverbindungen der nachfolgenden Formel II,
C) sulfatierte Tensidverbindungen der nachfolgenden Formel III, sowie
D) sulfonierte Tensidverbindungen der nachfolgenden Formel IV.

Gegenstand der vorliegenden Erfindung sind von organischen Lösungsmitteln freie Öl-in-Wasser-Emulsionen bestehend aus:
0,001 - 70 Gew.-%, vorzugsweise 0,5 - 50 Gew.-% mindestens eines Wirkstoffes aus der Gruppe der Phosphorsäureester, Thiophosphorsäureester und/oder Carbamate,
0,001 - 30 Gew.-%, bevorzugt 0,1 - 20 Gew.-% einer oder mehrerer Tensidverbindungen aus der Gruppe
   A) nichtionischer Tensidverbindungen der Formel I 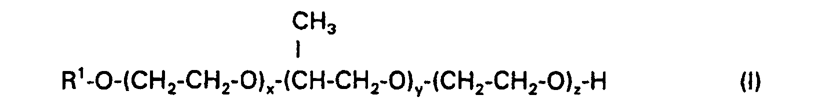 worin
      - R¹: C₁-C₂₄-Alkyl,
      C₂-C₂₄-Alkenyl,
      C₂-C₂₄-Alkinyl,
      C₅-C₂₄-Cycloalkyl,
      C₆-C₃₆-Aryl,
      (C₁-C₁₂-Alkyl)₃-Phenyl
      C₆-C₃₆-Heteroaryl
      C₆-C₄₈-Heteroalkaryl, Mono-, Di- oder Tristyrylphenyl
      - x und z: unabhängig voneinander eine Zahl von 0 bis 300 und
      - y: eine Zahl von 0 bis 200 bedeuten,
      mit der Maßgabe, daß die Summe aus x, y und z eine Zahl größer Null ist,
      oder
   B) phosphorylierter Tensidverbindungen der Formel II 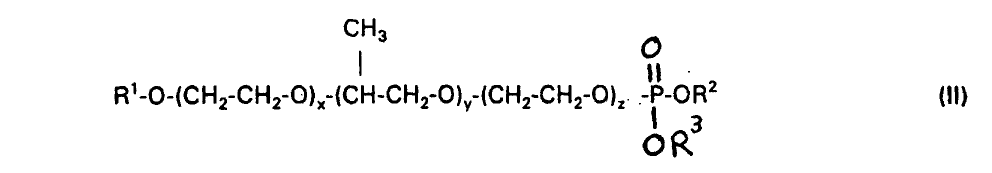 worin
      - R¹: C₁-C₂₄-Alkyl,
      C₂-C₂₄-Alkenyl,
      C₂-C₂₄-Alkinyl,
      C₆-C₂₄-Cycloalkyl,
      C₆-C₃₆-Aryl, ausgenommen Phenyl,
      C₆-C₄₈-Alkaryl, ausgenommen Trialkylphenyl,
      C₆-C₃₆-Heteroaryl oder
      C₆-C₄₈-Heteroalkaryl, oder einen Rest der Formel 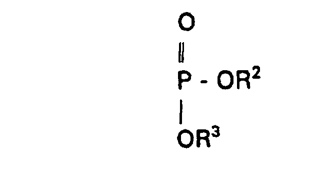 darstellt,
      - x, y und z: die in Formel I angegebene Bedeutung besitzen,
      - R²: Wasserstoff,
      ein Alkalimetallkation, ein Äquivalent eines Erdalkalimetallions,
      Ammonium,
      Mono-, Di- oder Tri(C₁-C₁₂)alkylammonium oder
      Mono-, Di- oder Tri(C₁-C₁₂)alkanolammonium
      und
      - R³: R² bedeutet;
   oder
C) sulfatierter Tensidverbindungen der Formel III 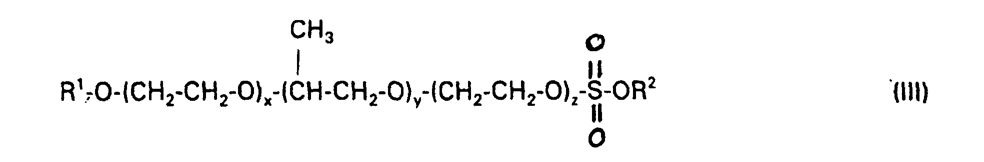 worin
   - R¹: die in Formel I angegebene Bedeutung besitzt oder C₆-C₄₈-Alkaryl bedeudet oder einen Rest der Formel 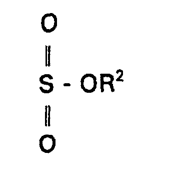 darstellt,
   - R²: die in Formel II angegebene Bedeutung besitzt und
   - x, y und z: die in Formel I angegebene Bedeutung haben
   oder
D) sulfonierter Tensidverbindungen der Formel IV 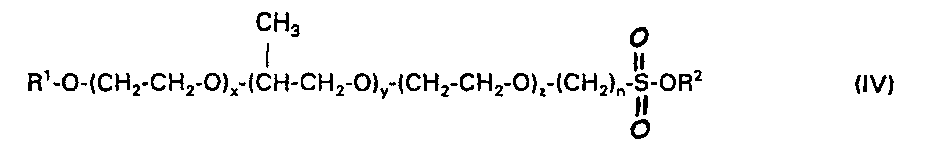 worin
   - R¹: die in Formel I angegebene Bedeutung besitzt oder C₆-C₄₈-Alkaryl bedeutet,
   - R²: die in Formel II angegebene Bedeutung besitzt,
   - x, y und z: die in Formel I angegebene Bedeutung haben und
   - n: eine Zahl von 1 - 3 bedeutet,
sowie gegebenenfalls Zusatzstoffen und
ad 100 Gew.-% Wasser.

Die erfindungsgemäßen O/W-Emulsionen enthalten mindestens einen agrochemischen Wirkstoff, einen Wirkstoff zur Bekämpfung von Schadorganismen im Haushalt und Hygienebereich und/oder einen pharmakologisch wirksamen Stoff aus der Klasse der Phosphorsäureester, Thiophosphorsäureester und/oder Carbamate. Als Wirkstoffe, bevorzugt hydrolyseempfindliche Wirkstoffe, kommen dabei sowohl solche Substanzen in Frage, die bei Raumtemperatur flüssig sind, als auch solche, die bei Raumtemperatur fest sind. Derartige Wirkstoffe sind bekannt und beispielsweise in "The Pesticide Manual" 9th edition, The British Crop Protection Council, 1991 beschrieben.

Im vorliegenden Fall versteht man unter agrochemischen Stoffen solche, wie sie üblicherweise im Pflanzenschutz Verwendung finden. Hierunter fallen zum Beispiel Insektizide, Akarizide, Fungizide, Nematizide, Herbizide, Molluskizide, Rodentizide, Wachstumsregulatoren, Safener, Adjuventien und Düngemittel und Algizide.

Als Beispiele für solche Wirkstoffe seien im einzelnen genannt:
O,O-Diethyl-O-[2-isopropyl-4-methylpyrimidyl-(6)]-thiophosphat (Diazinon)
O,O-Diethyl-O-[3,5,6-trichlor-2-pyridyl]thiophosphat (Chlorpyrophos)
2-(1-Methylpropyl)phenylmethylcarbamat (BPMC)
O,O-Dimethyl-S-methylcarbamoylmethyl-thiophosphorsäureester (Dimethoat)
Chlor-bicyclo[3.2.0]hepta-2,6-dien-6-yl-phosphorsäureester (Heptenophos)
O,O-Diethyl-O-1-phenyl-1H-1,2,4-triazol-3-yl-thiophosphorsäureester (Triazophos)
Ethyl-2-diethoxyphosphinthioyloxy-5-methylpyrazolyl[1,5-α]pyrimidin-6-carbonsäureester (Pyrazophos)
O,O-Diethyl-0-(4-nitro-phenyl)-thiono-phosphorsäureester
O,O-Dimethyl-O-(4-nitro-phenyl)-thiono-phosphorsäureester (Fenitrothion)
O-(Ethyl-O-(4-methylthio-phenyl)-S-propyl-dithiophosphat
2-lsopropoxy-phenyl-N-methylcarbamat
2,3-Dihydro-2,2-dimethyl-7-benzofuranyl-methyl-carbamat
3,5-Dimethyl-4-methylthiophenyl-N-methyl-carbamat
O,O-Diethyl-O-(3-chlor-4-methyl-7-cumarinyl)-thiophosphat
S-[1,2-Bis-(ethoxycarbonyl)-ethyl)-O,O-dimethyl-dithiophosphorsäureester (Malathion)
O,O-Dimethyl-O-(4-methylmercapto-3-methyl-phenyl)-thionophosphorsäureester (Fenthion, Lebaycid)
O-Ethyl-O-(2-isopropyloxycarbonyl-phenyl)-N-isopropylthionophosphorsäureesteramid.

Unter den Wirkstoffen zur Bekämpfung von Schädlingen im Haushalts- und Hygiene-Bereich sind im vorliegenden Fall alle üblichen in Wasser wenig löslichen Wirkstoffe zu verstehen. Als Beispiele für derartige Wirkstoffe seien im einzelnen genannt:

2-Isopropoxy-phenyl-N-methylcarbamat
O,O-Diethyl-0-(4-nitro-phenyl)-thionophosphorsäureester (Ethyl-Parathion)
O,O-Dimethyl-O-(4-nitro-phenyl)-thionophosphorsäureester (Methyl-Parathion)
S-[1,2-Bis-(ethoxycarbonyl)-ethyl]-O,O-dimethyl-dithiophosphorsäureester O,O-Dimethyl-O-(3-methyl-4-nitro-phenyl)-thionophosphorsäureester (Sumithion, Folithion)
O,O-Dimethyl-O-(4-methylmercapto-3-methyl-phenyl)-thionophosphorsäureester (Lebaycid, Fenthion).

Unter pharmakologisch wirksamen Stoffen sind im vorliegenden Fall vorzugsweise in veterinärmedizinischen Bereich einsetzbare, in Wasser wenig lösliche Stoffe zu verstehen. Als Beispiel für derartige Wirkstoffe sei genannt: Chlor-bicyclo[3.2.0]hepta-2,6-dien-6-yl-phosphorsäureester (Heptenophos).

Die erfindungsgemäßen Formulierungen enthalten mindestens ein Tensid der Formel I, II, III oder IV.

Bei den Tensiden der Formel I bedeutet R¹ vorzugsweise C₁₀-C₁₈-Alkyl, C₂-C₁₈-Alkenyl, C₆-C₂₀-Cycloalkyl, C₆-C₁₈-Aryl, (C₁-C₁₂-Alkyl)₃-Phenyl, Mono-, Di- oder Tristyrylphenyl.

Die Reste R¹ können, falls ungleich Wasserstoff, geeignete Substituenten tragen, z.B. Halogenatome, Alkoxygruppe, Hydroxygruppe, Nitrogruppe, Aminogruppe und/oder Carboxylestergruppe.

Die Bezeichnungen x, y und z geben die jeweilige Molzahl an Ethylenoxid- bzw. Propylenoxideinheiten an.

Für die Bezeichnungen x, y und z ergeben sich folgende bevorzugte Bereiche:
x und y gleich Null, z eine Zahl zwischen 5 und 30;
x eine Zahl zwischen 2 und 45, y eine Zahl zwischen 2 und 35 und z gleich Null;
y gleich Null, x und z unabhängig voneinander eine Zahl zwischen 1 und 60;
x gleich Null, y eine Zahl zwischen 2 und 30 und z eine Zahl zwischen 2 und 40.

Weitere bevorzugte Bereiche sind:
x, y und z unabhängig voneinander Zahlen zwischen 1 und 120, zwischen 1 und 80 und zwischen 1 und 30.

Ganz besonders geeignet sind Tensidverbindungen der Formel I in denen
- R¹: Mono-, Di- oder Tristyrylphenyl,
- x: eine Zahl zwischen 8 und 40;
- y: eine Zahl zwischen 0 und 25 und
- z: eine Zahl zwischen 0 und 40 bedeuten.

Bevorzugte Verbindungen der Formel I sind unter der Bezeichnung ®Emulsogen 3510, HOE S 2436 und HOE S 1816 (Produkte der Clariant GmbH, DE) erhältlich.

Die Tenside der Formel I sind auf einfache Weise herstellbar durch Alkoxylierung der entsprechenden Alkohole der Formel R¹-OH zu den erfindungsgemäß verwendeten Tensiden gemäß dem in DE-C-3 542 441 angegebenen Verfahren.

Bei den Tensiden der Formel II bedeutet R¹ vorzugsweise C₁-C₁₈-Alkyl, C₂-C₁₈-Alkenyl, C₁-C₁₂-Alkyl-Phenyl, Mono-, Di- oder Tristyrylphenyl oder einen Rest der Formel 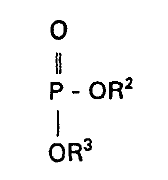 wobei R² und R³ unabhängig voneinander ein Alkalimetallkation, Mono-, Di- oder Tri-(C₂-C₄)-alkylammonium oder Tri-(C₂-C₄)-alkanolammonium bedeuten.

Die Reste R² und R³ sind bevorzugt ein Alkalimetallkation, Mono-, Di- oder Tri-(C₂-C₄)-alkylammonium oder Tri-(C₂-C₄)-alkanolammonium.

Für die Bezeichnungen x, y und z ergeben sich die bezüglich Formel I genannten bevorzugten Bereiche.

Besonders bevorzugt sind die Alkali- bzw. Tri-(C₂-C₄-)alkanolammoniumsalze.

Bevorzugte Tenside der Formel II sind unter den Bezeichnungen HOE S 3475, HOE S 3475-1, HOE S 3475-2 (Produkte der Clariant GmbH, DE) erhältlich.

Die Tenside der Formel II sind auf einfache Weise herstellbar durch Alkoxylierung der entsprechenden Alkohole der Formel R¹-OH zu den entsprechenden nichtionischen Blockcopolymeren, die durch anschließende Phosphorylierung entsprechend DE-C-3 542 441 zu den erfindungsgemäßen Tensiden der Formel II umgesetzt werden.

Bei den Tensiden der Formel III bedeutet R¹ vorzugsweise C₁-C₁₈-Alkyl, C₂-C₁₈-Alkenyl, C₆-C₂₀-Cycloalkyl, C₁-C₁₈-Alkylphenyl, insbesondere 1-Phenylethyl oder C₂-C₁₈-Alkenylphenyl, insbesondere Styryl oder einen Rest der Formel 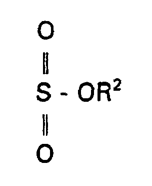 wobei R² ein Alkalimetallkation, Mono-, Di-, Tri-(C₁-C₁₂)-alkylammonium oder Tri-(C₁-C₁₂)-alkanolammonium bedeutet.

R² bedeutet bevorzugt ein Alkalimetallkation, Mono-, Di-, Tri-(C₁-C₁₂)-alkylammonium oder Tri-(C₁-C₁₂)-alkanolammonium.

R² bedeutet besonders bevorzugt ein Alkalimetallkation, Mono-, Di-, Tri-(C₂-C₄)-alkylammonium oder Tri-(C₂-C₄)-alkanolammonium.

Für die Bezeichnungen x, y und z ergeben sich die bezüglich Formel I genannten bevorzugten Bereiche.

Ganz besonders bevorzugte Tenside sind die Kalium-, Natrium- und Triethylammoniumsalze von 2,4,6-Bis-(1-phenylethyl)-phenylpolyglykolethersulfat mit 20 EO (Mittelwert)

Geeignete Tenside der Formel III sind die folgenden Produkte:
®Genapol LRO, ®Hostaphat BV konz. und ®Sapogenat BK konz. (Clariant GmbH, DE).

Die Herstellung der Tenside der Formel III erfolgt analog der vorstehend beschriebenen Herstellungsweise. Durch Sulfatierung der nichtionischen Blockcopolymeren entsprechend Formel I werden die erfindungsgemäßen Tenside erhalten (siehe K. Kosswig und H. Stache, "Die Tenside", Hauser-Verlag 1993, S. 130).

Bei den Tensiden der Formel IV bedeutet R¹ vorzugsweise C₁-C₁₈-Alkyl, C₂-C₁₈-Alkenyl, C₆-C₂₀-Cycloalkyl, C₁-C₁₈-Alkylphenyl, insbesondere 1-Phenylethyl und C₂-C₁₈-Alkenylphenyl, insbesondere Styryl.

R² bedeutet vorzugsweise ein Alkalimetallkation, Mono-, Di-, Tri(C₂-C₄)alkylammonium oder Tri(C₂-C₄)alkanolammonium.
Für die Bezeichnungen x, y und z ergeben sich die bezüglich Formel I genannten bevorzugten Bereiche, n bedeutet bevorzugt die Zahl 2.

Die Herstellung der Tensidverbindungen der Formel IV erfolgt analog der vorstehend beschriebenen Herstellungsweise. Durch Umsetzung des nichtionischen Blockcopolymeren entsprechend Formel I mit Thionylchlorid zur entsprechenden Chlorverbindung und nachfolgender Umsetzung mit Natriumsulfit gelangt man zu den Tensiden der Formel IV (siehe P.K.K. Hodgson, N.J. Stewart,E.J. Tinley; "Alkylphenylethoxyethansulphonates", Tenside Detergents 23 (1986), 4, p. 175-177).

Die erfindungsgemäßen O/W-Emulsionen enthalten Wasser als kontinuierliche Phase. Im Falle von konzentrierten Emulsionen ist der Wasseranteil relativ gering, während die Emulsionen in verdünntem Zustand größere Mengen an Wasser enthalten. Die Ölphase (= disperse Phase) liegt in Form feinverteilter Tröpfchen in der wäßrigen Phase vor, wobei die Größe der Tröpfchen innerhalb eines bestimmten Bereiches variieren kann. Der Teilchendurchmesser liegt im allgemeinen zwischen 0,001 und 10 µm, vorzugsweise zwischen 0,01 und 5 µm, insbesondere zwischen 0,1 und 2 µm.

Vorteilhafterweise enthalten diese O/W-Emulsionen keine organischen Lösungsmittel. Sie haben daher einen hohen Flammpunkt und sind kaum brennbar.

Ebenso sind sie nahezu frei von Geruchsbelästigungen und weisen im allgemeinen eine geringere Toxizität bzw. Phytotoxizität auf.

Als Zusatzstoffe, die in den erfindungsgemäßen Öl-in-Wasser-Emulsionen enthalten sein können, kommen Konservierungsmittel, Kältestabilisatoren, Farbstoffe und Geruchsverbesserungsmittel in Betracht.
Als Beispiele für Konservierungsmittel seien 2-Hydroxybiphenyl, Sorbinsäure, p-Hydroxybenzaldehyd, p-Hydroxybenzoesäuremethylester, Benzaldehyd, Benzoesäure, p-Hydroxybenzoesäurepropylester und p-Nitrophenol genannt. Der Gehalt an Konservierungsmittel in der Emulsion kann zwischen 0,01 und 1 Gew.-% liegen.
Als Kältestabilisatoren kommen Glykol, Glycerin, Polyethylenglycol, Zucker und Salze, wie Ammoniumsulfat und Natriumoleat in Betracht, wobei die Emulsionen üblicherweise einen Gehalt von 1 bis 10 Gew.-% aufweisen können.
Als Beispiele für Farbstoffe seien Azofarbstoffe und Phthalocyanin-Farbstoffe angeführt. Als Geruchsverbesserungsmittel können Parfümöle eingesetzt werden.

Ein geeignetes Herstellverfahren für diese O/W-Emulsion wird beispielsweise in EP-A-0 130 370 beschrieben. Prinzipiell jedoch können die beiden Phasen durch Rühren in den gewünschten Zustand gebracht werden.

Die Öl-in-Wasser-Emulsionen zeichnen sich dadurch aus, daß sie unter den in der Praxis herrschenden Bedingungen stabil sind. Bei Langzeit-Lagerungen bleiben diese Emulsionen sowohl bei hohen Temperaturen (50°C) als auch bei tiefen Temperaturen (-5°C, -10°C) hinsichtlich ihrer physikalischen Stabilität und ihres Wirkstoffgehaltes unverändert. Ein weiterer Vorteil besteht darin, daß sich bei Raumtemperatur feste bzw. flüssige Wirkstoffe gleichermaßen gut emulgieren lassen. Der zwingende Einsatz von Glycerin als Zusatzstoff sowie von organischen Lösungsmitteln, insbesondere bei dem Einsatz von festen Wirkstoffen (vgl. EP-A-0 196 463) ist nicht erforderlich.

Die erfindungsgemäßen Öl-in-Wasser-Emulsionen können entweder in der zubereiteten Form oder nach vorheriger Verdünnung appliziert werden. Die Anwendung richtet sich dabei nach der Konzentration der Öl-in-Wasser-Emulsion und nach der jeweiligen Indikation. Die Anwendung der Emulsion erfolgt nach den üblichen Methoden, also zum Beispiel durch Spritzen, Sprühen oder Gießen.

Die in den beigefügten Tabellen zusammengefaßten Formulierungsbeispielen belegen die breite Anwendbarkeit.

Nachfolgend steht EO für Ethylenoxid PO für Propylenoxid.

Pflanzenschutzformulierungen mit Tensiden der Formel I:

| | R¹ | x | y | z |
|---|---|---|---|---|
| Tensid A1 | Tristyrylphenyl | 20 | 0 | 0 |
| Tensid A4 | n-C₄H₆ | 2 | 23 | 40 |
| Tensid A5 | Tributylphenyl | 11 | 0 | 0 |
| Tensid A7 | C₁₆-C₂₃-Alkyl | 10 | 0 | 0 |

Tabelle I zeigt erfindungsgemäße O/W-Emulsionen, die über einen Zeitraum von mindestens 1 Monat stabil sind (Lagertemperatur 25°C bzw. 50°C).

**Tabelle I**

| Beispiel; Angaben in Gew.-%, Wasser ad 100 Gew.-% | | | | | | |
|---|---|---|---|---|---|---|
| | A1 | A2 | A3 | A4 | A5 | A6 |
| Tensid A1 | 7 | 10 | 10 | | | |
| Tensid A4 | | | | | 7 | |
| Tensid A5 | | | | 7 | | |
| Tensid A7 | | | | | | 7 |
| Kelzan S 2 %ig, wässrig | 7 | 7 | 15 | 13,3 | 13,3 | 13,3 |
| Antischaumemulsion SE2 | | | | | | |
| Malathion 95-96 %ig | 42 | 42 | 42 | 42 | 42 | 42 |
| Ethylparathion 98 %ig | | | | | | |

Pflanzenschutzformulierungen mit Tensiden der Formel II:

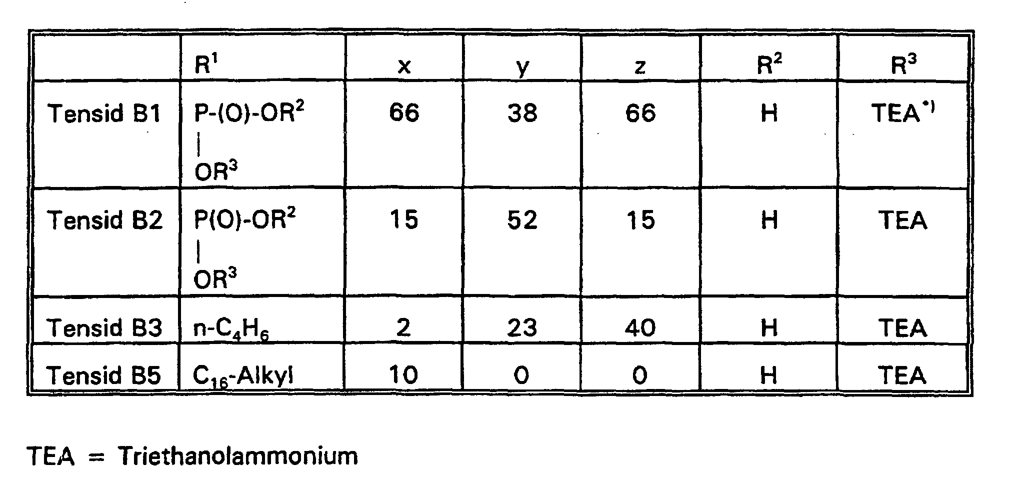

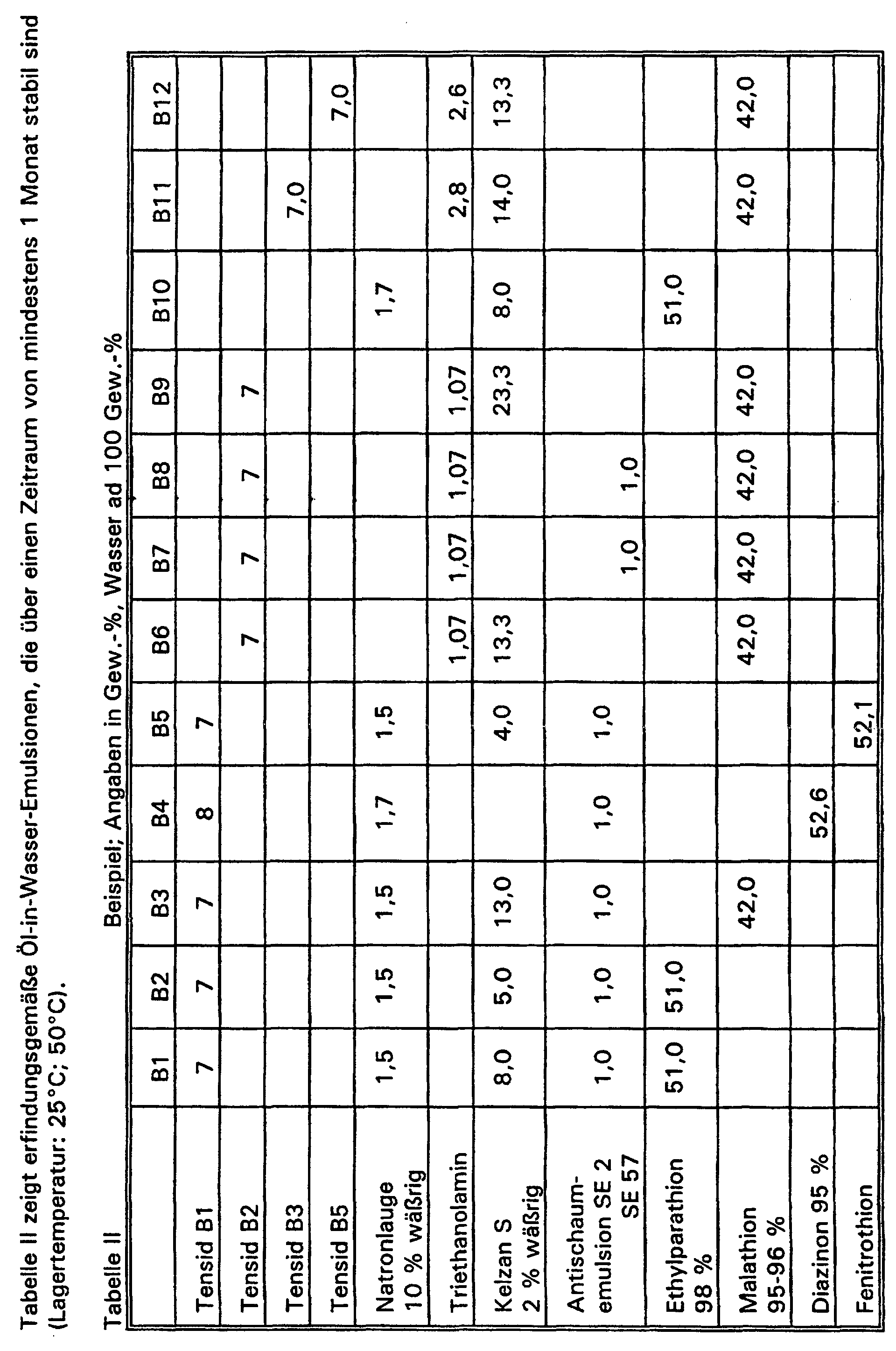

Pflanzenschutzformulierungen mit Tensiden der Formeln III und IV:
- Tensid C1: Tristyrylphenolpolyglykolethersulfat
(ca. 20 EO)-TEA-Salz
- Tensid C2: Tributylphenolpolyglykolethersulfat
(ca. 8 EO) Natriumsalz
- Tensid C3: Lauryl-Diglykol-Ethersulfat-Natriumsalz
- Tensid D1: Tristyrylphenolpolyglykolethersulfonat
(ca. 20 EO)-TEA-Salz

Tabelle III zeigt erfindungsgemäße O/W-Emulsionen, die über einen zeitraum von mindestens 1 Monat bei 25°C und zum größten Teil auch bis bzw. bei 50°C stabil sind.

**Tabelle III**

| Beispiel; Angaben in Gew.-%, Wasser ad 100 Gew.-% | | | | | | | |
|---|---|---|---|---|---|---|---|
| | C1 | C2 | C3 | C4 | C5 | C6 | D1 |
| Tensid C1 | 7 | 7 | | | | | |
| Tensid C2 | | | 7 | 7 | | | |
| Tensid C3 | | | | | 7 | 7 | |
| Tensid D1 | | | | | | | 5 |
| Kelzan S 2 % wäßrig | 13 | 13 | 13 | 10 | 13 | 10 | 13 |
| Antischaumemulsion SE 2 | 1 | 1 | | | | | |
| Malathion 95-96 % | 42 | | 42 | | 42 | | 42 |
| Ethylparathion 98 % | | 51 | | 51 | | 51 | |

## Patentansprüche

1. Von organischen Lösungsmitteln freie Öl-in-Wasser-Emulsionen, bestehend aus
0,001 - 70 Gew.-%, vorzugsweise 0,5 - 50 Gew.-% mindestens eines Wirkstoffes aus der Gruppe der Phosphorsäureester, Thiophosphorsäureester und/oder Carbamate,
0.001 - 30 Gew.-%, vorzugsweise 0,1 - 20 Gew.-% einer oder mehrerer Tensidverbindungen aus der Gruppe
A) nichtionischer Tensidverbindungen der Formel I 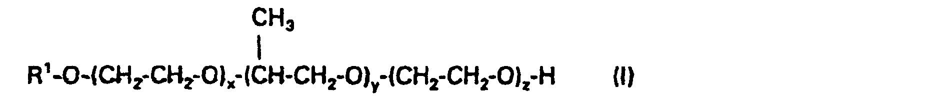 worin
R¹ C₁-C₂₄-Alkyl,
C₂-C₂₄-Alkenyl,
C₂-C₂₄-Alkinyl,
C₅-C₂₄-Cycloalkyl,
C₆-C₃₆-Aryl,
(C₁-C₁₂-Alkyl)₃-Phenyl
C₆-C₃₆-Heteroaryl
C₆-C₄₈-Heteroalkaryl, Mono-, Di- oder Tristyrylphenyl,
x und z unabhängig voneinander eine Zahl von 0 bis 300 und
y eine Zahl von 0 - 200 bedeuten,
mit der Maßgabe, daß die Summe aus x, y und z eine Zahl
größer Null ist
oder
B) phosphorylierter Tensidverbindungen der Formel II 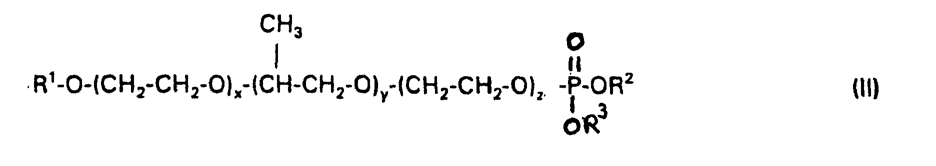 worin
R¹ C₁-C₂₄-Alkyl,
C₂-C₂₄-Alkenyl,
C₂-C₂₄-Alkinyl,
C₅-C₂₄-Cycloalkyl,
C₆-C₃₆-Aryl, ausgenommen Phenyl,
C₆-C₄₈-Alkaryl, ausgenommen Trialkylphenyl,
C₆-C₃₆-Heteroaryl oder
C₆-C₄₈-Heteroalkaryl, oder einen Rest der Formel 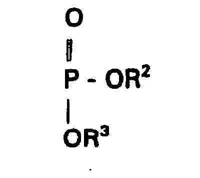 darstellt,
x, y und z die in Formel I angegebene Bedeutung besitzen,
R² Wasserstoff,
ein Alkalimetallkation, ein Äquivalent eines Erdalkalimetallions, Ammonium,
Mono-, Di- oder Tri(C₁-C₁₂)alkylammonium oder
Mono-, Di- oder Tri(C₁-C₁₂)alkanolammonium
und
R³ R² bedeutet;
oder
C) sulfatierter Tensidverbindungen der Formel III 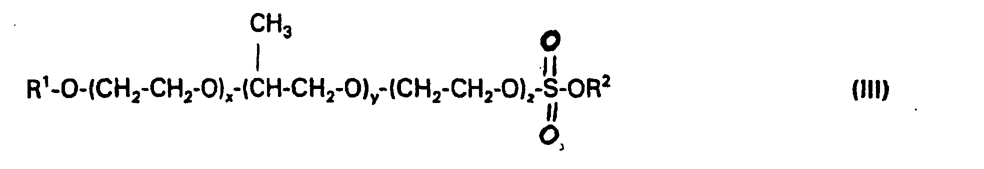 worin
R¹ die in Formel I angegebene Bedeutung besitzt oder C₆-C₄₈-Alkaryl bedeutet oder einen Rest der Formel 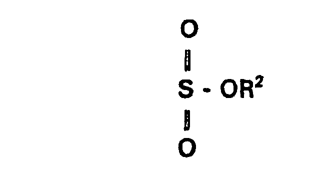 darstellt,
R² die in Formel II angegebene Bedeutung besitzt und
x, y und z die in Formel I angegebene Bedeutung haben
oder
D) sulfonierter Tensidverbindungen der Formel IV 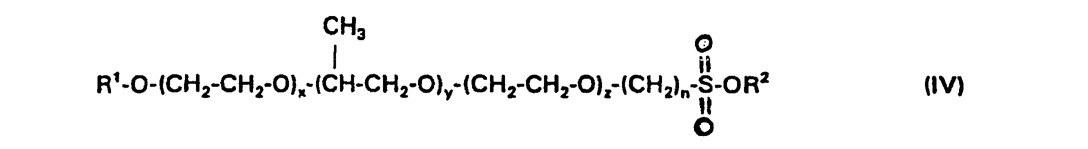 worin
R¹ die in Formel I angegebene Bedeutung besitzt oder C₆-C₄₈-Alkaryl bedeutet,
R² die in Formel II angegebene Bedeutung besitzt,
x, y und z die in Formel I angegebene Bedeutung haben und
n eine Zahl von 1 - 3 bedeutet,
sowie gegebenenfalls Zusatzstoffen und
ad 100 Gew.-% Wasser.

2. Öl-in-Wasser-Emulsionen nach Anspruch 1, **dadurch gekennzeichnet, daß** in den Tensidverbindungen der Formel I
R¹ C₁₀-C₁₈-Alkyl, C₂-C₁₈-Alkenyl, C₆-C₂₀-Cycloalkyl, C₆-C₁₈-Aryl, (C₁-C₁₂-Alkyl)₃-Phenyl, Mono-, Di- oder Tristyrylphenyl bedeutet.

3. Öl-in-Wasser-Emulsionen nach Anspruch 1, **dadurch gekennzeichnet, daß** in den Tensidverbindungen der Formel II
R¹ C₁-C₁₈-Alkyl, C₂-C₁₈-Alkenyl, C₁-C₁₂-Alkyl-Phenyl, Mono-, Di- oder Tristyrylphenyl oder ein Rest der Formel 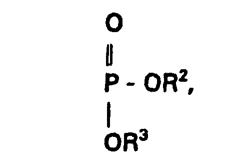 wobei R² und R³ unabhängig voneinander ein Alkalimetallkation, Mono-, Di- oder Tri-(C₂-C₄)-alkylammonium oder Tri-(C₂-C₄)-alkanolammonium bedeuten.

4. Öl-in-Wasser-Emulsionen nach Anspruch 1 oder 3, **dadurch gekennzeichnet, daß** in den Tensidverbindungen der Formel II R² und R³ unabhängig voneinander ein Alkalimetallkation, Mono-, Di- oder Tri-(C₂-C₄)-alkylammonium oder Tri-(C₂-C₄)-alkanolammonium bedeuten.

5. Öl-in-Wasser-Emulsionen nach Anspruch 1, **dadurch gekennzeichnet, daß** in den Tensidverbindungen der Formel III
R¹ C₁-C₁₈-Alkyl, C₂-C₁₈-Alkenyl, C₆-C₂₀-Cycloalkyl, C₁-C₁₈-Alkylphenyl oder C₂-C₁₈-Alkenylphenyl oder ein Rest der Formel 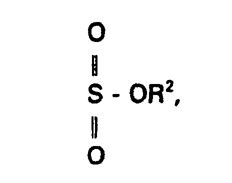 wobei R² ein Alkalimetallkation, Mono- Di-, Tri-(C₁-C₁₂)-alkylammonium oder Tri-(C₁-C₁₂)-alkanolammonium bedeutet.

6. Öl-in-Wasser-Emulsionen nach Anspruch 1 oder 5, **dadurch**
**gekennzeichnet, daß** in den Tensidverbindungen der Formel III R² ein Alkalimetallkation, Mono-, Di-, Tri-(C₁-C₁₂)-alkylammonium oder Tri-(C₁-C₁₂)-alkanolammonium bedeutet.

7. Öl-in-Wasser-Emulsionen nach Anspruch 1, **dadurch gekennzeichnet, daß** in den Tensidverbindungen der Formel IV R¹ C₁-C₁₈-Alkyl, C₂-C₁₈-Alkenyl, C₆-C₂₀-Cycloalkyl, C₁-C₁₈-Alkylphenyl und C₂-C₁₈ Alkenylphenyl bedeutet.

8. Öl-in-Wasser-Emulsionen nach Anspruch 1 oder 7, **dadurch gekennzeichnet, daß** in den Tensidverbindungen der Formel IV R² ein Alkalimetallkation, Mono-, Di-, Tri-(C₂-C₄)-Alkylammonium oder Tri-(C₂-C₄)-Alkanolammonium bedeutet.

9. Öl-in-Wasser-Emulsionen nach einem der Ansprüche 1 bis 8, **dadurch gekennzeichnet, daß** in den Tensidverbindungen der Formeln I, II, III und IV
x und y gleich Null, z eine Zahl zwischen 5 und 30;
x eine Zahl zwischen 2 und 45, y eine Zahl zwischen 2 und 35 und z gleich Null;
x eine Zahl zwischen 1 und 60, y gleich Null und z eine Zahl zwischen 1 und 60, oder
x gleich Null, y eine Zahl zwischen 2 und 30 und z eine Zahl zwischen 2 und 40.

10. Öl-in-Wasser-Emulsionen nach einem der Ansprüche 1 bis 9, **dadurch gekennzeichnet, daß** in den Tensidverbindungen der Formeln I, II, III und IV x, y und z unabhängig voneinander Zahlen zwischen 1 und 120, bevorzugt zwischen 1 und 80, insbesondere zwischen 1 und 30 sind.

11. Öl-in-Wasser-Emulsionen nach einem der Ansprüche 1 bis 10, **dadurch gekennzeichnet, daß** sie als Zusatzstoffe Konservierungsmittel, Kältestabilisatoren, Farbstoffe und/oder Geruchsverbesserungsmittel enthalten.

12. Öl-in-Wasser-Emulsionen nach einem der Ansprüche 1 bis 11, **dadurch gekennzeichnet, daß** die Ölphase in Form feinverteilter Tröpfchen in der wäßrigen Phase vorliegt.

13. Öl-in-Wasser-Emulsionen nach einem der Ansprüche 1 bis 12, **dadurch gekennzeichnet, daß** der Teilchendurchmesser der Tröpfchen zwischen 0,001 und 10 µm, vorzugsweise zwischen 0,01 und 5 µm, insbesondere zwischen 0,1 und 2 µm liegt.

14. Verwendung von Öl-in-Wasser-Emulsionen gemäß einem der Ansprüche 1 bis 13 in der Landwirtschaft und im Gartenbau, im Haushalts- und Hygienebereich und/oder im medizinischen Bereich, wobei die Verwendung in Verfahren gemäß Artikel 52(4) EPÜ ausgenommen ist.

## Claims

1. An oil-in-water emulsion which is free of organic solvents, consisting of
0.001 to 70% by weight, preferably 0.5 to 50% by weight, of at least one active substance from the group consisting of phosphates, thiophosphates and/or carbamates,
0.001 to 30% by weight, preferably 0.1 to 20% by weight, of one or more surfactant compounds from the group consisting of
A) nonionic surfactant compounds of the formula I 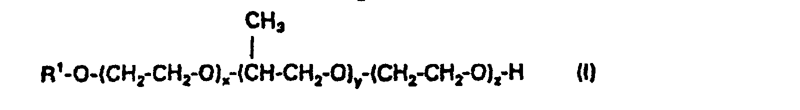 in which
R¹ is C₁-C₂₄-alkyl,
C₂-C₂₄-alkenyl,
C₂-C₂₄-alkynyl,
C₅-C₂₄-cycloalkyl,
C₆-C₃₆-aryl,
(C₁-C₁₂-alkyl)₃-phenyl
C₆-C₃₆-heteroaryl
C₆-C₄₈-heteroalkaryl, mono-, di- or tristyrylphenyl,
x and z independently of one another are a number between 0 and 300 and
y is a number between 0 and 200, with the proviso that the sum of x, y and z is a number greater than zero
or
B) phosphorylated surfactant compounds of the formula II 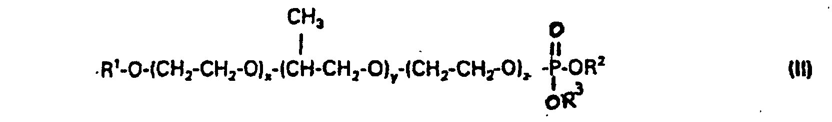 in which
R¹ is C₁-C₂₄-alkyl,
C₂-C₂₄-alkenyl,
C₂-C₂₄-alkynyl,
C₅-C₂₄-cycloalkyl,
C₆-C₃₆-aryl, with the exception of phenyl,
C₆-C₄₈-alkaryl, with the exception of trialkylphenyl,
C₆-C₃₆-heteroaryl or
C₆-C₄₈-heteroalkaryl, or a radical of the formula 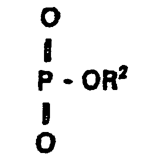 x, y and z are as defined for formula I,
R² is hydrogen,
an alkali metal cation, one equivalent of an alkaline earth metal ion,
ammonium,
mono-, di- or tri(C₁-C₁₂)alkylammonium or
mono-, di- or tri(C₁-C₁₂)alkanolammonium
and
R³ is R²;
or
C) sulfated surfactant compounds of the formula III 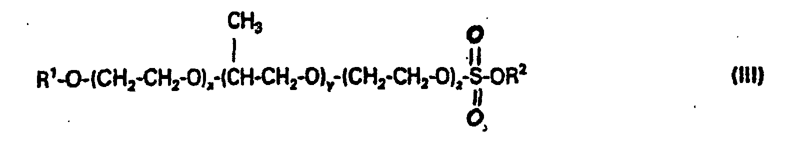 in which
R¹ is as defined for formula I or is C₆-C₄₈-alkaryl or is a radical of the formula 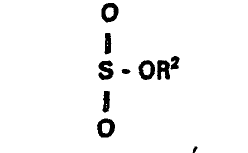
R² is as defined for formula II, and
x, y and z are as defined for formula I
or
D) sulfonated surfactant compounds of the formula IV 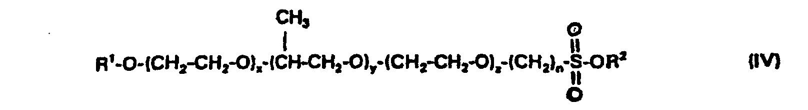 in which
R¹ is as defined for formula I or is C₆-C₄₈-alkaryl,
R² is as defined for formula II,
x, y and z are as defined for formula I, and
n is a number 1 - 3,
and, if desired, additives, and
water to 100% by weight.

2. An oil-in-water emulsion as claimed in claim 1, wherein in the surfactant compounds of the formula I
R¹ is C₁₀-C₁₈-alkyl, C₂-C₁₈-alkenyl, C₆-C₂₀-cycloalkyl, C₆-C₁₈-aryl, (C₁-C₁₂-alkyl)₃-phenyl, mono-, di- or tristyrylphenyl.

3. An oil-in-water emulsion as claimed in claim 1, wherein in the surfactant compounds of the formula II
R¹ is C₁-C₁₈-alkyl, C₂-C₁₈-alkenyl, C₁-C₁₂-alkylphenyl, mono-, di- or tristyrylphenyl or a radical of the formula 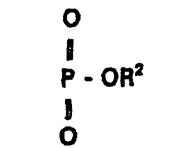 in which R² and R³ independently of one another are an alkali metal cation, mono-, di- or tri-(C₂-C₄)-alkylammonium or tri- (C₂-C₄)-alkanolammonium.

4. An oil-in-water emulsion as claimed in claim 1 or 3, wherein in the surfactant compounds of the formula II, R² and R³ independently of one another are an alkali metal cation, mono-, di- or tri(C₂-C₄)-alkylammonium or tri(C₂-C₄)-alkanolammonium.

5. An oil-in-water emulsion as claimed in claim 1, wherein in the surfactant compounds of the formula III
R¹ is C₁-C₁₈-alkyl, C₂-C₁₈-alkenyl, C₆-C₂₀-cycloalkyl, C₁-C₁₈-alkylphenyl or C₂-C₁₈-alkenylphenyl or a radical of the formula 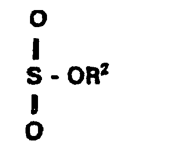 where R² is an alkali metal cation, mono-, di-, tri(C₁-C₁₂)-alkylammonium or tri(C₁-C₁₂)-alkanolammonium.

6. An oil-in-water emulsion as claimed in claim 1 or 5, wherein in the surfactant compounds of the formula III R² is alkali metal cation, mono-, di-, tri- (C₁-C₁₂)-alkylammonium or tri- (C₁-C₁₂)-alkanolammonium.

7. An oil-in-water emulsion as claimed in claim 1, wherein in the surfactant compounds of the formula IV R¹ is C₁-C₁₈-alkyl, C₂-C₁₈-alkenyl, C₈-C₂₀-cycloalkyl, C₁-C₁₈-alkylphenyl or C₂-C₁₈-alkenylphenyl.

8. An oil-in-water emulsion as claimed in claim 1 or 7, wherein in the surfactant compounds of the formula IV R² is alkali metal cation, mono-, di-, tri-(C₂-C₄)-alkylammonium or tri-(C₂-C₄)-alkanolammonium.

9. An oil-in-water emulsion as claimed in any of claims 1 to 8, wherein in the surfactant compounds of the formula I, II, III and IV
x and y are zero, z is a number between 5 and 30;
x is a number between 2 and 45, y is a number between 2 and 35 and z is zero;
x is a number between 1 and 60, y is zero and z is a number between 1 and 60, or
x is zero, y is a number between 2 and 30 and z is a number between 2 and 40.

10. An oil-in-water emulsion as claimed in one of claims 1 to 9, wherein in the surfactant compounds of the formulae I, II, III and IV x, y and z independently of one another are numbers between 1 and 120, preferably between 1 and 80 and, in particular, between 1 and 30.

11. An oil-in-water emulsion as claimed in one of claims 1 to 10, which comprises as adjuvants preservatives, low temperature stabilizers, dyes and/or odor improvers.

12. An oil-in-water emulsion as claimed in one of claims 1 to 11, wherein the oil phase is present in the form of finely divided droplets in the aqueous phase.

13. An oil-in-water emulsion as claimed in one of claims 1 to 12, wherein the particle diameter of the droplets is between 0.001 and 10 µm, preferably between 0.01 to 5 µm and, in particular, between 0.1 and 2 µm.

14. The use of an oil-in-water emulsion as claimed in one of claims 1 to 13 in agriculture, horticulture, the household or hygiene sector and/or in medicine, with the exception of its use in methods according to Article 52(4) EPC.

## Revendications

1. Emulsions d'huile dans l'eau exemptes de solvants organiques, constituées de
0,001 à 70 % en poids, de préférence de 0,5 à 50 % en poids d'au moins une substance active choisie parmi les esters d'acide phosphorique, les esters d'acide thiophosphorique et/ou les carbamates,
0,001 à 30 % en poids, de préférence de 0,1 à 20 % en poids d'un ou de plusieurs composés tensioactifs choisis parmi
A) les composés tensioactifs non ioniques de formule I 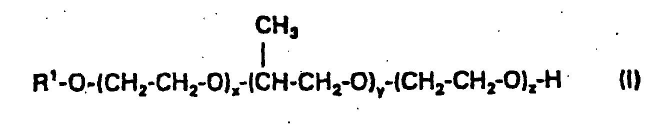 dans laquelle
R¹ représente un groupe alkyle en C₁-C₂₄, alcényle en C₂-C₂₄, alcynyle en C₂-C₂₄, cycloalkyle en C₅-C₂₄, aryle en C₆-C₃₆, (alkyle en C₁-C₁₂)₃-phényle, hétéroaryle en C₆-C₃₆, hétéroalcaryle en C₆-C₄₈, mono-, di- ou tristyrylphényle,
x et z représentent indépendamment l'un de l'autre un nombre de 0 à 300 et
y représente un nombre de 0 à 200,
avec la condition que la somme de x, y et z soit un nombre supérieur à zéro
ou
B) les composés tensioactifs phosphorylés de formule II 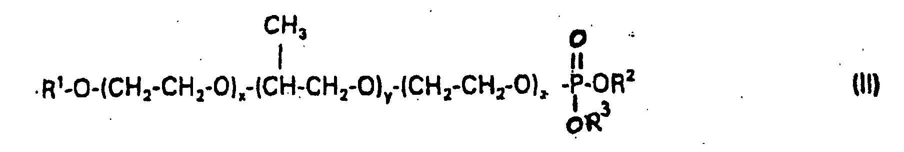 dans laquelle
R¹ représente un groupe alkyle en C₁-C₂₄, alcényle en C₂-C₂₄, alcynyle en C₂-C₂₄, cycloalkyle en C₅-C₂₄, aryle en C₆-C₃₆, à l'exception du phényle, alcaryle en C₆-C₄₈, à l'exception du trialkylphényle, hétéroaryle en C₆-C₃₆ ou hétéroalcaryle en C₆-C₄₈, ou un groupe de formule 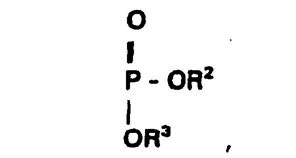
x, y et z possèdent la signification indiquée à la formule I,
R² représente un atome d'hydrogène, un cation de métal alcalin, un équivalent d'un cation de métal alcalino-terreux, l'ammonium, un mono-, di- ou tri(alkyle en C₁-C₁₂)-ammonium ou mono-,. di- ou tri(alcanol en C₁-C₁₂)-ammonium
et
R³ représente R² ;
ou
C) les agents tensioactifs sulfatés de formule III 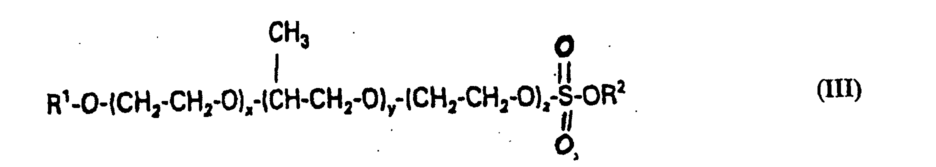 dans laquelle
R¹ possède la signification indiquée à la formule I ou représente un groupe alcaryle en C₆-C₄₈ ou un groupe de formule 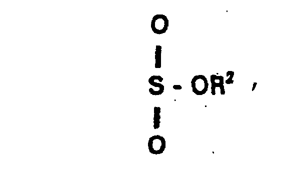
R² possède la signification indiquée à la formule II et
x, y et z ont la signification indiquée à la formule I
ou
D) les composés tensioactifs sulfonés de formule IV 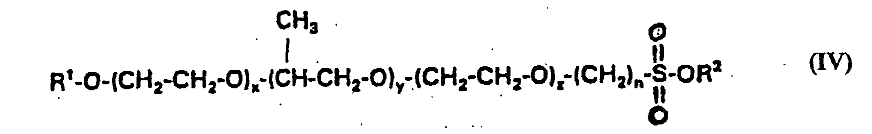 dans laquelle
R¹ possède la signification indiquée à la formule I ou représente un groupe alcaryle en C₆-C₄₈,
R² possède la signification indiquée à la formule II,
x, y et z ont la signification indiquée à la formule I
et
n représente un nombre de 1 à 3,
ainsi qu'éventuellement des additifs et
jusqu'à 100 % en poids d'eau.

2. Emulsions d'huile dans l'eau selon la revendication 1, **caractérisées en ce que** dans les composés tensioactifs de formule I
R¹ représente un groupe alkyle en C₁₀-C₁₈, alcényle en C₂-C₁₈, cycloalkyle en C₆-C_{20,} aryle en C₆-C₁₈, (alkyle en C₁-C₁₂)₃-phényle, mono-, di- ou tristyrylphényle.

3. Emulsions d'huile dans l'eau selon la revendication 1, **caractérisées en ce que** dans les composés tensioactifs de formule II
R¹ représente un groupe alkyle en C₁-C₁₈, alcényle en C₂-C₁₈, alkyle en C₁-C₁₂-phényle, mono-, di- ou tristyrylphényle ou un groupe de formule 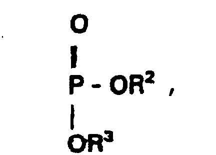 dans laquelle R² et R³ représentent indépendamment l'un de l'autre un cation de métal alcalin, un mono-, di- ou tri(alkyle en C₂-C₄)-ammonium ou tri(alcanol en C₂-C₄)-ammonium.

4. Emulsions d'huile dans l'eau selon la revendication 1 ou 3, **caractérisées en ce que** dans les composés tensioactifs de formule II R² et R³ représentent indépendamment l'un de l'autre un cation de métal alcalin, un mono-, di- ou tri(alkyle en C₂-C₄)-ammonium ou tri(alcanol en C₂-C₄)-ammonium.

5. Emulsions d'huile dans l'eau selon la revendication 1, **caractérisées en ce que** dans les composés tensioactifs de formule III
R¹ représente un groupe alkyle en C₁-C₁₈, alcényle en C₂-C₁₈, cycloalkyle en C₆-C₂₀, alkyle en C₁-C₁₈-phényle ou alcényle en C₂-C₁₈-phényle, ou un groupe de formule 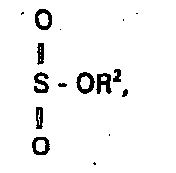 dans laquelle R² représente un cation de métal alcalin, un mono-, di-, tri(alkyle en C₁-C₁₂)-ammonium ou tri(alcanol en C₁-C₁₂)-ammonium.

6. Emulsions d'huile dans l'eau selon la revendication 1 ou 5, **caractérisées en ce que** dans les composés tensioactifs de formule III R² représente un cation de métal alcalin, un mono-, di-, tri-alkyle en C₁-C₁₂-ammonium ou tri-alcanol en C₁-C₁₂-ammonium.

7. Emulsions d'huile dans l'eau selon la revendication 1, **caractérisées en ce que** dans les composés tensioactifs de formule IV R¹ représente un groupe alkyle en C₁-C₁₈, alcényle en C₂-C₁₈, cycloalkyle en C₆-C₂₀, alkyle en en C₁-C₁₈-phényle et alcényle en en C₂-C₁₈-phényle.

8. Emulsions d'huile dans l'eau selon la revendication 1 ou 7, **caractérisées en ce que** dans les composés tensioactifs de formule IV R² représente un cation de métal alcalin, un mono-, di- ou tri(alkyle en C₂-C₄)-ammonium ou tri(alcanol en C₂-C₄)-ammonium.

9. Emulsions d'huile dans l'eau selon l'une des revendications 1 à 8 **caractérisées en ce que** dans les composés tensioactifs des formules I, II, III et IV x et y sont égaux à zéro, z est un nombre entre 5 et 30 ;
x est un nombre entre 2 et 45, y un nombre entre 2 et 35 et z est égal à zéro ;
x est un nombre entre 1 et 60, y est égal à zéro et z est un nombre entre 1 et 60, ou
x est égal à zéro, y est un nombre entre 2 et 30 et z est un nombre entre 2 et 40.

10. Emulsions d'huile dans l'eau selon l'une des revendications 1 à 9 **caractérisées en ce que** dans les composés tensioactifs des formules I, II, III et IV x, y et z représentent indépendamment les uns des autres des nombres entre 1 et 120, de préférence entre 1 et 80, en particulier entre 1 et 30.

11. Emulsions d'huile dans l'eau selon l'une des revendications 1 à 10 **caractérisées en ce qu'**elles contiennent comme additifs des agents de conservation, des stabilisants au froid, des colorants et/ou des agents d'amélioration de l'odeur.

12. Emulsions d'huile dans l'eau selon l'une des revendications 1 à 11 **caractérisées en ce que** la phase huile se présente sous forme de gouttelettes finement dispersées dans la phase aqueuse.

13. Emulsions d'huile dans l'eau selon l'une des revendications 1 à 12 **caractérisées en ce que** le diamètre moyen de particules des gouttelettes se situe entre 0,001 et 10 µm, de préférence entre 0,01 et 5 µm, en particulier entre 0,1 et 2 µm.

14. Utilisation d'émulsions d'huile dans l'eau selon l'une des revendications 1 à 13 dans l'agriculture et l'horticulture, dans le domaine ménager et de l'hygiène et/ou dans le domaine médical, l'utilisation dans des procédés selon l'article 52(4) EPÜ étant exclue.
